# EUROPÄISCHE PATENTANMELDUNG

(11) **EP 2 290 248 A1**
(43) Veröffentlichungstag der Anmeldung: **02.03.2011**
(21) Anmeldenummer: 10006566.3
(22) Anmeldetag: 24.06.2010
(51) Int. Cl.: F16C 1/26

(54) **Seilzugglied und zugehöriges Seilzugsystem**

(30) Priorität: 31.08.2009 DE 102009039407
(71) Anmelder: CARL STAHL GMBH, 73079 Süssen (DE)
(72) Erfinder: Funk, Wolfgang, 73072 Donzdorf (DE)
(74) Vertreter: Bartels & Partner

(57) **Zusammenfassung**

Seilzugglied und zugehöriges Seilzugsystem.

Die Erfindung betrifft ein Seilzugglied mit einem druckstabilen Formkörper, der einen Durchgang umfasst für die Aufnahme eines Zugkraft übertragenden Seiles, wobei der Durchgang im Bereich einer Gelenkstelle des Formkörpers unter Bildung einer Einschnürung reduziert ist. Des Weiteren betrifft die Erfindung ein derartiges Seilzugglieder aufweisendes Seilzugsystem.

## Beschreibung

Die Erfindung betrifft ein Seilzugglied mit einem druckstabilen Formkörper, der einen Durchgang umfasst für die Aufnahme eines Zugkraft übertragenden Seiles, wobei der Durchgang im Bereich einer Gelenkstelle des Formkörpers unter Bildung einer Einschnürung reduziert ist. Des Weiteren betrifft die Erfindung ein derartiges Seilzugglieder aufweisendes Seilzugsystem. Derartige Seilzuglieder aufweisende Seilzugsysteme kommen beispielsweise als Ersatz für herkömmliche Bowdenzüge bei Zweirädern zur Betätigung von Gangschaltungen und/ oder Bremsen zum Einsatz.

Gegenüber den herkömmlichen Bowdenzügen, bei denen in der Regel ein zugkraftübertragendes Seil von einem aus gewendeltem Stahldraht gebildeten Mantel umhüllt ist, der in der Lage ist, Druckkraft aufzunehmen, erlauben gattungsgemäße Seilzugsysteme, aufgrund der insbesondere bei einer bogenförmigen Verlegung des Mantels gegebenen höheren Stabilität, eine präzisere Betätigung der genannten Einrichtungen. Darüber hinaus kann durch eine geeignete Ausgestaltung des Durchgangs der Formkörper eine gegenüber herkömmlichen Bowdenzügen reduzierte Reibung des Seils an dem es umhüllenden Mantel erreicht werden.

Aus der DE 195 34 643 C2 ist ein Seilzugsystem mit einem Zugkraft übertragenden Seil und einem Druckkraft aufnehmenden, das Seil umhüllenden Mantel, welcher aus aneinander gereihten Formstücken besteht, welche mit einem axialen Durchbruch versehen sind, wobei die Formstücke stirnseitig an formkongruent gekrümmten Flächen anliegen, wodurch der Mantel bogenförmig verlegbar ist, bekannt. Bei der bekannten Lösung grenzen an dem mittig in der Längserstreckung des Formstücks angeordneten Durchbruch im Querschnitt größere Ausnehmungen an. Dabei sind die Formstükke auf ein biegsames Träger- und Führungsrohr aufgefädelt.

Ein Seilzugglied mit einem druckstabilen Formkörper nach dem Oberbegriff von Patentanspruch 1 ist aus der Patentschrift DD 225 753 A1 bekannt geworden. Eine Einrichtung zur Übertragung von in Längsrichtung wirkenden hohen Zugkräften umfaßt eine flexible Führungshül le aus auf einem Seil- bzw. Drahtzug aneinandergereihten Gelenkkörpern, welche als zylindrische Körper mit einer zentrischen Bohrung ausgebildet sind. Die Stirnflächen der zylindrischen Gelenkkörper sind auf einer Seite pfannenartig und gegenüberliegend kugelförmig mit einander entsprechenden Radien so gestaltet, dass im montierten Zustand Kugelfläche und Pfanne seitengeführt ineinandergreifen. Die Gelenkkörper sind als formsteife und druckfeste Elemente ausgebildet. Durch die Gelenkkörper-Stirnflächen wird eine Seitenführung und ein gutes Druckbild erreicht. Im Bereich der zentrischen Bohrung sind die Innenoberflächen der Gelenkkörper gerade, d.h. einen gleichförmigen Abstand zur Rotationssymmetrieachse aufweisend, ausgebildet.

Ein Seilzugglied mit einem druckstabilen Formkörper mit den Merkmalen des Oberbegriffs von Patentanspruch 2 ist aus DE 195 34 643 A1 bekannt - geworden. Die Seilzugglieder sind Teil von variabel verlegbaren Kraftübertragungsmitteln, welche durch einen Mantel aus aneinandergereihten, mit axialen Durchbrüchen versehenen Formstücken bestehen und von einem Zugseil durchgriffen werden. Die Formstücke weisen jeweils eine Durchgangsbohrung auf, welche beidseitig trichterförmig aufgeweitet ist und mindestens dem Durchmesser des Zugseils entspricht. Zwischen zwei Formstücken ist jeweils eine Hülse angeordnet, welche beidseitig eine konkave, kugelpfannenförmige Ausnehmung aufweist, welche formkongruent zu den konvex geformten Flächen der Formstücke ist. Beide Stirnseiten eines Formstückes weisen eine konkave, kugelpfannenförmige Ausnehmung auf.

DE 100 23 670 A1 betrifft eine Weiterentwicklung zu der aus DE 195 34 643 A1 bekannten Lösung. Der Weiterentwicklung liegt die Aufgabe zugrunde, ein Zug-/Druck-Seilzugsystem mit einem Druckmantel, gebildet aus verkettbaren Gelenkteilen zu schaffen, durch welchen mehrere Zugseile in je einer Führung eines Führungsrohres bewegt werden können, welches bei Bogenlegung längenstabil bleibt, leichter und knickresistent ist, spannungsfrei arbeitet, sowie hohe Drücke aufnehmen kann und geringsten Reibwiderstand des bzw. der Seile gewährleistet. Hierzu sind die Gelenkteile mit einem Durchbruch mit in axialer Richtung mit maßlich differenzierten Querschnittsbereichen ausgebildet und liegen an stirnseitig fomkongruent gekrümmten Flächen an, wodurch die Gelenkteile ineinander verkettbar sind.

Aus WO 2004/096628 A2 ist ein Seilzugsystem mit mehreren Seilzuggliedern, einem inneren Mantel um ein inneres Kabel und einem äußeren Mantel um die Seilzugglieder bekannt. Die Seilzugglieder weisen vielfältige Formen auf, beispielsweise einen von einem Ende das Seilzugglied zum anderen Ende abnehmenden Innendurchmesser. Der Außendurchmesser kann ebenfalls variieren. Der minimale Innendurchmesser kann am Ende oder an einer anderen Stelle im Inneren des Seilzuggliedes angeordnet sein.

Ausgehend von dem genannten Stand der Technik liegt der Erfindung die Aufgabe zugrunde, ein Seilzugglied bereitzustellen, das bei vereinfachter Fertigung und verringertem Materialbedarf eine hohe Druckstabilität aufweist. Des Weiteren liegt der Erfindung die Aufgabe zugrunde, ein derartiges Seilzugglieder aufweisendes Seilzugsystem bereitzustellen.

Die dahingehenden Aufgaben löst ein Seilzugglied mit den Merkmalen eines der Patentansprüche 1 bis 2 in ihrer jeweiligen Gesamtheit bzw. ein Seilzugsystem mit den Merkmalen des Patentanspruchs 12 in seiner Gesamtheit.

Bei einer Ausführungsform des erfindungsgemäßen Seilzugglieds weist dieses einen druckstabilen Formkörper auf, der einen Durchgang umfasst für die Aufnahme eines Zugkraft übertragenden Seiles, wobei der Durchgang im Bereich einer Gelenkstelle des Formkörpers unter Bildung einer Einschnürung reduziert ist, und wobei ausgehend von dieser Einschnürung zu den beiden stirnseitigen freien Enden des Formkörpers hin der Durchmesser des Durchgangs sich erweitert. Dadurch dass die Gelenkstelle an einem an einem freien Ende des Formkörpers angrenzenden Bereich angeordnet ist und dass ausgehend von der Einschnürung in Richtung des anderen freien Endes der Durchmesser des Durchgangs sich stetig, vorzugsweise in konischer Bahnform, erweitert, ist in diesem Bereich des Durchgangs eine Verringerung des Materialbedarfs erreicht, die ohne Einbußen bezüglich der Druckstabilität des Formkörpers auch mit einer Gewichtsreduktion desselben einhergeht. Durch das stetige Erweitern des Durchgangs in diesem Bereich, der sich bei einer Ausführungsform über einen Großteil der Längserstreckung des Formkörpers erstreckt, ist des Weiteren ein hemmnisfreies Einführen des Zugkraft übertragenden Seils in das Seilzugglied gewährleistet. Dadurch dass der Durchmesser des Durchgangs sich stetig und vorzugsweise in konischer Bahnform erweitert, vereinfacht sich auch die Fertigung des erfindungsgemäßen Seilzugglieds.

Bei einer weiteren Lösungsalternative des erfindungsgemäßen Seilzugglieds weist dieses einen druckstabilen Formkörper auf, der einen Durchgang umfaßt für die Aufnahme eines Zugkraft übertragenden Seiles, wobei der Durchgang im Bereich einer Gelenkstelle des Formkörpers unter Bildung einer Einschnürung reduziert ist, und wobei ausgehend von dieser Einschnürung zum einen freien Ende des Formkörpers hin, das der Gelenkstelle benachbart ist, der Durchmesser des Durchgangs sich unter Bildung eines Einlauftrichters stetig erweitert. Dadurch dass ausgehend von der Einschnürung zum einen freien Ende des Formkörpers hin der Durchmesser des Durchgangs sich im Querschnitt gesehen entlang eines Kreisbogens erweitert und dass unter Reduzierung der wirksamen Anlagefläche der Einschnürung für das Zugkraft übertragende Seil der Kreisbogen des Einlauftrichters als Teil der randseitigen Begrenzung für die insoweit geradlinig oder ballig verlaufende Einschnürung zum anderen freien Ende des Formkörpers hin unmittelbar in eine sich konisch erweiternd verlaufende Bahnform als Auslauftrichter übergeht, ist durch die Reduktion der wirksamen Anlagefläche der Einschnürung eine Verringerung der auftretenden Reibungsverluste beim Bewegen des im Durchgang des Seilzugglieds aufgenommenen Seiles erreicht. Dies führt zu einem präzisen, hemmnisarmen und mit reduziertem Kraftaufwand verbundenen Betätigen von beispielsweise der Bremse oder der Gangschaltung eines Zweirads. Der sich im Querschnitt gesehen entlang eines Kreisbogens stetig erweiternde Durchmesser des Durchgangs führt zu einem vereinfachten und insbesondere hemmnisarmen Auffädeln des Seilzugglieds auf das in dem Seilzugglied aufzunehmende Seil. Des weiteren erlaubt die so gewählte Form des Einlauftrichters zwischen dem Bereich der Einschnürung und dem einen freien Ende des Seilzugglieds ein relativ starkes Abwinkeln des Seils gegenüber der Längsachse des Seilzugglieds, ohne dass dieses hierbei bereits in Berührung an den Einführtrichter kommt und somit ohne das hierbei zusätzliche Reibungsverluste bei einer Betätigungsbewegung des Seils auftreten. Insbesondere bei einer ballig verlaufenden Einschnürung, welche lediglich zu einem Linienkontakt zwischen der Einschnürung und dem aufgenommenen Seil oder aber einem bevorzugt kurzen geradlinigen Verlauf der Einschnürung, welcher zu einem bandförmigen Kontakt zwischen der Einschnürung und Seil führt, ist die wirksame Anlagefläche der Einschnürung reduziert, was neben verringerten Reibverlusten auch zu einem geringeren Verschleiß des Seils führt. Des weiteren ist durch eine solche Ausgestaltung der Einschnürung bei dem erfindungsgemäßen Seilzugglied auch ein relativ starkes Verschwenken des Seilzugglieds gegenüber dem aufgenommenen Seil möglich, ohne dass hierbei das aufgenommene Seil außerhalb der Einschnürung in Kontakt mit dem Seilzugglied gelangt.

Bei dem erfindungsgemäßen Formkörper ist die Bahnform des Durchgangs, ausgehend von der Einschnürung in Richtung des anderen freien Endes, durch einen geraden Kreiskegelstumpf als konische Erweiterung beschreibbar, dessen Achse mit der Längsachse des Formkörpers zusammenfällt und dessen mit der Längsachse eingeschlossener Winkel 1 bis 5 Grad, vorzugsweise 2 bis 4 Grad und besonders bevorzugt ungefähr 3 Grad beträgt. Durch die Wahl eines nur kleinen eingeschlossenen Winkels ist hier erreicht, dass die als Kreiskegelstumpf beschreibbare konische Erweiterung in Richtung des anderen freien Endes sich über einen sehr weiten Bereich der Längserstreckung des Formkörpers erstrecken kann und somit längs ihrer gesamten Erstreckung zu einem kontinuierlichen Verringern benötigten Materials bei der Fertigung des erfindungsgemäßen Seilzugglieds mit beiträgt.

Bei einer bevorzugten Ausführungsform des Seilzugglieds erweitert sich, ausgehend von der Einschnürung in Richtung des anderen freien Endes, der Durchmesser des Durchgangs stetig in konischer Bahnform über mindestens 60% der Längserstreckung des Formkörpers. Hierdurch ist eine vereinfachte Fertigung dieses Abschnitts des Durchgangs gegeben und darüber hinaus ist ein hemmnisfreies Auffädeln des Seilzugglieds auf ein Seil unterstützt.

In noch gesteigertem Maß trifft dies für eine besonders bevorzugte Ausführungsform des erfindungsgemäßen Seilzugglieds zu, bei dem sich ausgehend von der Einschnürung in Richtung des anderen freien Endes der Durchmesser des Durchgangs in konischer Bahnform über 60 bis 95 %, vorzugsweise über 70 bis 90 % und besonders bevorzugt über 75 bis 85 % der Längserstreckung des Formkörpers erweitert.

Bei einer besonderen Ausführungsform des erfindungsgemäßen Seilzugglieds weist dieses einen druckstabilen Formkörper auf, der einen Durchgang umfasst für die Aufnahme eines Zugkraft übertragenden Seiles, wobei der Durchgang im Bereich einer Gelenkstelle des Formkörpers unter Bildung einer Einschnürung reduziert ist, wobei die Gelenkstelle zumindest teilweise durch eine konvex geformte Außenkontur des Formkörpers im Bereich seines einen freien Endes gebildet ist, die über eine absatzartige Verbreiterung in eine Außenfläche übergeht. Dadurch dass die Außenfläche ausgehend von der absatzartigen Verbreiterung bis zum anderen freien Ende des Formkörpers, das der Gelenkstelle abgewandt ist, stetig verläuft, vorzugsweise eine zylinderförmige Bahnform aufweist, ist ein wesentlicher Beitrag zu einer erhöhten Druckstabilität des Seilzugglieds geleistet, da Störstellen bzw. Inhomogenitäten, die zu einer Reduktion der Stabilität des Seilzugglieds führen könnten, vermieden sind. Darüber hinaus ist durch die somit weitgehend glatte Oberfläche der Außenfläche des Seilzugglieds auch ein ansprechendes Aussehen gegeben, was insbesondere bei hochwertigen Zweirädern, bei denen bevorzugt die erfindungsgemäßen Seilzugglieder zum Einsatz kommen, von Vorteil ist. Auch ist eine derartige Gestaltung der Außenfläche des Seilzugglieds ein Beitrag zur Verringerung des Verletzungsrisikos, da die, insbesondere auch im Bereich eines Lenkers eines Zweirads, montierten Seilzugglieder ein reduziertes Risiko aufweisen daran mit Körper- oder Kleidungsteilen hängen zu bleiben oder sich zu verhaken. Auch ist die Fertigung der relativ einfachen Form der Außenfläche des Seilzugglieds mit Kosteneinsparungen verbunden.

Bei einer weiteren bevorzugten Ausführungsform des erfindungsgemäßen Seilzugglieds ist die Gelenkstelle durch eine Kugelfläche auf der Außenkontur des Formkörpers gebildet. Durch die kugelflächenförmige Ausbildung der Gelenkstelle ist trotz der damit einhergehenden Materialreduzierung in Richtung des einen freien Endes des Seilzugglieds die hohe Druckstabilität des Formkörpers weiterhin gewährleistet. Eine kugelflächenförmige Gelenkstelle erlaubt das Seilzugglied in sehr viele Richtungen um die Gelenkstelle auszulenken.

Bei einer weiter bevorzugten Ausführungsform des Seilzugglieds ist eine zur Gelenkstelle korrespondierende und zu dieser formkongruente Lagerstelle, der Gelenkstelle gegenüberliegend, an der Innenkontur des Formkörpers angeordnet und in der Art des Gürtels bzw. Zone einer Kugelfläche ausgebildet. Durch die Ausbildung als Gürtel ist eine hohe Stabilität der Lagerstelle gegeben, die auch bei einer sehr schmalen Ausführung der Schicht und damit bei einer starken Reduzierung der an der Lagerstelle im Betrieb auftretenden Reibung erhalten bleibt.

Bei einer bevorzugten Ausführungsform des erfindungsgemäßen Seilzugglieds ist die Lagerstelle an dem anderen freien Ende des Formstücks in eine kreisförmig ausgebildete Stirnfläche des Formstücks über und bei zwei aneinander gereihten Formstücken ist die Gelenkstelle des einen Formstücks in der Lagerstelle des anderen Formstücks gelenkig gelagert und zur Begrenzung des maximalen Winkelversatzes zweier aneinander gereihter Formstücke ist die kreisförmig ausgebildete Stirnfläche des einen Formstücks zumindest teilweise in Anlage an eine Außenkontur des anderen Formstücks bringbar. Durch diese Maßnahme ist der maximale Winkelsatz zweier aneinander gereihter Seilzugglieder begrenzt. Hierdurch ist insbesondere bei der Aneinanderreihung einer Vielzahl von Seilzuggliedern, die beispielsweise im Bereich von Einrichtungen der Gangschaltung eines Zweirades in der Nähe der Achse des Hinterrades in einem Bogen zu verlegen sind, gewährleistet, dass jeder Übergang zwischen zwei Seilzuggliedern jeweils den gleichen Winkelanteil des Bogens übernimmt und so ein kontinuierlicher Verlauf der Seilzugglieder und damit auch des darin aufgenommenen Sei les gegeben ist, was zu einer präzisen und zuverlässigen Betätigung, der Gangschaltung führt.

Bei einer besonders bevorzugten Ausführungsform des erfindungsgemäßen Seilzugglieds, weist der Formkörper zumindest an seiner Innenwand eine Reibung vermindernde Beschichtung auf. Hierdurch lässt sich insbesondere die im Bereich der Einschnürung auftretende Reibung zwischen Seil und Seilzugglied bei Betätigen des Seils reduzieren, was zu einem zuverlässigeren und kraftsparenderen Betätigen der mit dem Seil jeweils angesteuerten Einrichtung führt. Sofern die gesamte Oberfläche des Seilzugglieds mit einer derartigen Beschichtung versehen ist, können aneinandergereihte Seilzugglieder besonders reibungsarm gegeneinander ausgelenkt werden.

Bei einer weiteren bevorzugten Ausführungsform des erfindungsgemäßen Seilzugglieds ist dies aus Kunststoff, Metall oder einem Keramikmaterial gebildet.

Das erfindungsgemäße Seilzugsystem weist mindestens zwei erfindungsgemäße Seilzugglieder mit jeweils einem druckstabilen Formkörper auf, die aneinander gereiht einen Druckkraft aufnehmenden mehrteiligen Mantel bilden, sowie ein Zugkraft übertragendes Seil, das zumindest abschnittsweise in dem Mantel aufnehmbar ist.

Bei einer bevorzugten Ausführungsform des erfindungsgemäßen Seilzugsystems ist das Zugkraft übertragende Seil ein Edelstahlseil. Ein derartiges Edelstahlseil ist zum einen zuverlässig, erlaubt auch bei geringen Durchmessern die Übertragung sehr hoher Zugkräfte und gewährleistet, da es nicht rostet, eine lange Lebensdauer.

Bei einer weiteren bevorzugten Ausführungsform des erfindungsgemäßen Seilzugsystems ist das Zugkraft übertragende Seil von einer schlauchförmigen Gleithülle umgeben, die einen reibungsarmen Transport des Seils in ihrem Innenraum zulässt und deren Außendurchmesser so gewählt ist, dass die Gleithülle den Mantel durchgreifen kann. Hierdurch ist gewährleistet, dass die den Mantel bildenden aneinander gereihten Seilzugglieder hemmnisarm auf die Gleithülle aufgefädelt werden können und sich das Seil innerhalb der Gleithülle auch im Bereich der Einschnürung des Formkörpers mit möglichst geringen Reibungsverlusten bewegen lässt.

Bei einer bevorzugten Ausführungsform des erfindungsgemäßen Seilzugsystems ist der aus den aneinander gereihten Seilzuggliedern gebildete Mantel durch einen Schutz- und/oder Stabilisierungshülle in Form eines flexiblen Schlauches umhüllt, welche nach außen hin einen Schutz gegen Verschmutzungen oder Witterungseinflüsse bildet. Des weiteren ist durch eine solche Hülle auch eine leichtere Handhabung und Installation der auf ein Seil bzw. eine Gleithülle aufgefädelten Seilzugglieder ermöglicht, da die Hülle stabilisierend auf diesen Aufbau wirkt.

Bei einer weiteren bevorzugten Ausführungsform des erfindungsgemäßen Seilzugsystems ist die Schutz- und/oder Stabilisierungshülle aus einem transparenten Material gebildet, was bei einer attraktiven Oberfläche der Seilzugglieder zu einem ansprechenden Aussehen des erfindungsgemäßen Seilzugsystems führt.

Nachstehend ist die Erfindung anhand eines in der Zeichnung dargestellten Ausführungsbeispiels im Einzelnen erläutert. Es zeigen:
- Fig. 1: eine Draufsicht auf ein erfindungsgemäßes Seilzugglied;
- Fig. 2: einen Längsschnitt durch ein erfindungsgemäßes Seilzugglied längst der Linie A-A in Fig. 1 und
- Fig. 3: ein erfindungsgemäßes Seilzugsystem.

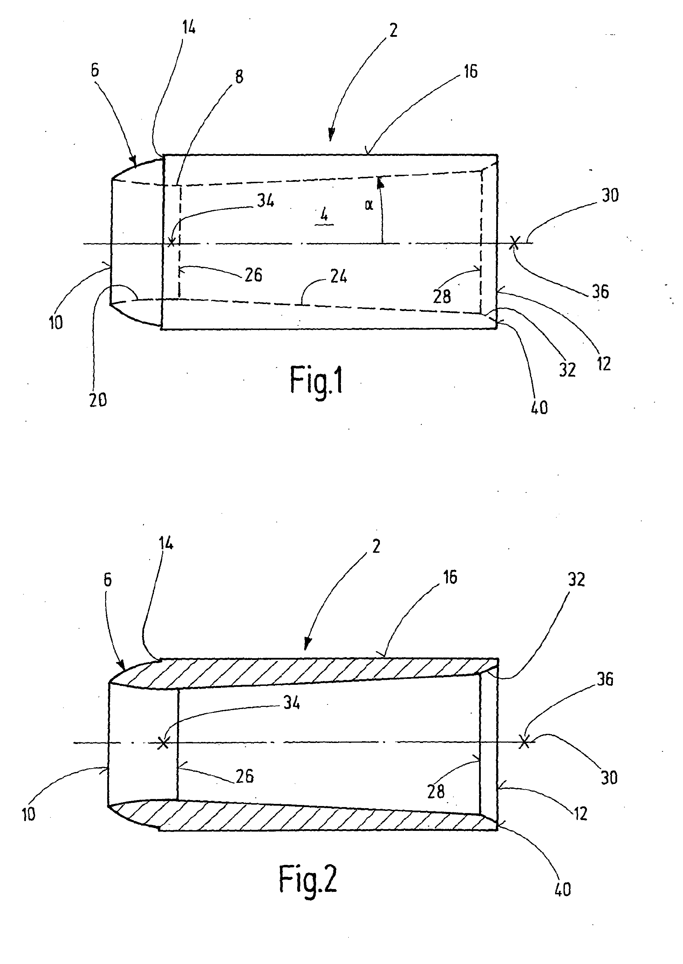

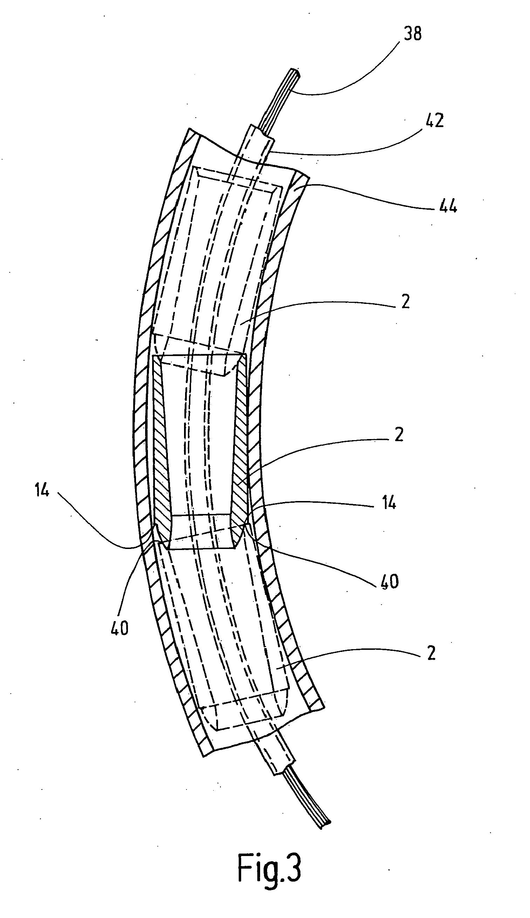

In der Fig. 1 ist ein erfindungsgemäßes Seilzugglied mit einem druckstabilen Formkörper 2, der einen Durchgang 4 umfasst, für die Aufnahme eines Zugkraft übertragenden Seils 38 (in der Fig. 1 nicht gezeigt, siehe Fig. 3) dargestellt. Der Durchgang 4 ist im Bereich einer Gelenkstelle 6 des Formkörpers 2 unter Bildung einer Einschnürung 8 reduziert. Ausgehend von dieser Einschnürung 8 erweitert der Durchmesser des Durchgangs 4 zu dem stirnseitigen einen freien Ende 10 und dem stirnseitigen anderen freien Ende 12 des Formkörpers 2 hin. Hierbei ist die Gelenkstelle 6 an einem an dem einen freien Ende 10 des Formkörpers 2 angrenzenden Bereich angeordnet und ausgehend von der Einschnürung 8 in Richtung des anderen freien Endes 12 erweitert sich der Durchmesser der Durchgangs 4 stetig und, wie in der Fig. 1 dargestellt, beispielhaft in konischer Bahnform.

Die Gelenkstelle 6 ist durch eine konvex geformte Außenkontur des Formkörpers im Bereich seines einen freien Endes 10 gebildet, welche über eine absatzartige Verbreiterung 14 in eine Außenfläche 16 übergeht. Ausgehend von der absatzartigen Verbreiterung 14 verläuft die Außenfläche 16 bis zum anderen freien Ende 12 des Formkörpers stetig. Beispielhaft ist in der Fig. 1 eine zylinderförmige Bahnform des Verlaufs der Außenfläche 16 dargestellt.

Ausgehend von der Einschnürung 8 erweitert sich der Durchmesser des Durchgangs 4 zum einen freien Ende 10 des Formkörpers 2 hin stetig und bildet dergestalt einen Einlauftrichter 18 des Formkörpers 2 aus.

In der Fig. 1 ist beispielhaft dargestellt, dass sich der Durchmesser des Durchgangs 4 im Querschnitt gesehen, entlang eines Kreisbogens 20 erweitert und unter Reduzierung der wirksamen Anlagefläche der Einschnürung 8 für das Zugkraft übertragende Seil 38 (siehe Fig. 3) der Kreisbogen 20 des Einlauftrichters 18 als Teil der randseitigen Begrenzung für die insoweit geradlinig oder ballig verlaufende Einschnürung 8 zum anderen freien Ende 12 des Formkörpers 2 hin unmittelbar in eine sich konisch erweiternd verlaufende Bahnform als Auslauftrichter 22 übergeht.

Die Bahnform des Durchgangs 4 ist ausgehend von der Einschnürung 8 in Richtung des anderen freien Endes 12 durch einen geraden Kreiskegelstumpf als konische Erweiterung 24 beschreibbar, deren eine Stirnfläche 26 und deren andere Stirnfläche 28 in der Fig. 1 strichliniert dargestellt sind. Die Achse des Kreiskegelstumpfes als konische Erweiterung 24 fällt mit der Längsachse 30 des Formkörpers zusammen und der mit der Längsachse 30 eingeschlossene Winkel α des Kreiskegelstumpfes beträgt ungefähr 3 Grad. Über die in der Fig. 1 gezeigte Ausführungsform hinaus sind jedoch eingeschlossene Winkel α von 1 bis 5 Grad oder bevorzugt von 2 bis 4 Grad ebenfalls vorteilhaft.

Ausgehend von der Einschnürung 8 erweitert sich der Durchmesser des Durchgangs 4 in Richtung des anderen freien Endes 12 stetig und gemäß der Ausführungsform, dargestellt in Fig. 1, erstreckt sich die konische Erweiterung über ungefähr 80% der Längserstreckung des Formkörpers 2.

Die Gelenkstelle 6 ist bei der gezeigten Ausführungsform durch eine Kugelfläche auf der Außenkontur des Formkörpers 2 gebildet, wobei der Mittelpunkt 34, der die Kugelfläche der Gelenkstelle 6 ausbildenden Kugel auf der Längsachse 30, bevorzugt im Bereich der Einschnürung 8 angeordnet ist. Bei der in der Fig. 1 gezeigten Ausführungsform erstreckt sich die Kugelfläche in Richtung der Längsachse 30 über ungefähr 13 bis 14% der Längserstreckung des Formkörpers 2.

Eine zu der Gelenkstelle 6 korrespondierende und zu dieser formkongruente Lagerstelle 32 ist der Gelenkstelle 6 gegenüberliegend an der Innenkontur des Formkörpers 2 angeordnet und in der Art des Gürtels einer Kugelfläche ausgebildet. Die Lagerstelle 32 ist konkav ausgeführt, sodass eine formkongruente Kugel in dieser gelenkig lagerbar ist. Der Mittelpunkt 36 der Kugelfläche liegt auf der Längsachse 30 des Formkörpers 2 und gemäß der Ausführungsform in Fig. 1 außerhalb des Formkörpers 2 auf der Seite mit dem anderen stirnseitigen Ende 12.

Die Radien der Gelenkstelle 6 sowie der Lagerstelle 32 sind wie in Fig. 1 bevorzugt identisch, jedoch sind auch Lösungen denkbar, bei denen der Radius der Gelenkstelle 6 geringfügig kleiner ist als der Radius der Lagerstelle 32, was insbesondere für das Berücksichtigen von Fertigungstoleranzen notwendig sein könnte.

Die in der Art des Gürtels einer Kugelfläche ausgeführte Lagerstelle 32 erstreckt sich in Richtung der Längsachse 30 über ungefähr 4% der Längserstreckung des Formkörpers 2, und ist somit schmaler als die entsprechende Erstreckung der Gelenkstelle 6. Dergestalt ist erreicht, dass die in die Lagerstelle 32 lagernd einbringbare Gelenkstelle 6 nur mit einer geringen Fläche dort in Anlage kommt, sodass hier auftretende Reibungsverluste gering gehalten werden.

Die Lagerstelle 32 geht an dem anderen freien Ende 12 des Formkörpers 2 in eine kreisförmig ausgebildete Stirnfläche 40 des Formkörpers 2 über. Bei zwei aneinander gereihten Formkörpern 2 ist die Gelenkstelle 6 des einen Formkörpers 2 in der Lagerstelle 32 des anderen Formkörpers 2 gelenkig gelagert und zur Begrenzung des maximalen Winkelversatzes zweier aneinander gereihter Formkörper 2 ist die kreisförmig ausgebildete Stirnfläche 40 des einen Formkörpers 2 zumindest teilweise in Anlage an eine Außenkontur, beispielsweise an die absatzartige Verbreiterung 14 des anderen Formkörpers 2, bringbar.

Der in der Fig. 2 gezeigte Längsschnitt eines erfindungsgemäßen Seilzugglieds stellt den bevorzugt aus einem Vollmaterial gebildeten Formkörper 2 dar, und in dieser Darstellung sind die beiden Stirnflächen 26 und 28 der konischen Erweiterung 24 durch im Durchgang 4 verlaufende Kanten sichtbar.

Die Fig. 3 zeigt ein erfindungsgemäßes Seilzugsystem, welches in der Darstellung drei Seilzugglieder mit jeweils einem druckstabilen Formkörper 2 umfasst, die aneinander gereiht einen Druckkraft aufnehmenden Mantel bilden und zeigt des Weiteren auch das Seil 38 zum Übertragen einer Zugkraft, welches zumindest abschnittsweise in dem Mantel aufgenommen ist. Das Seil 38 ist hierbei von einer Gleithülle 42 umgeben, wobei die aneinander gereihten Formkörper 2 des Weiteren von einer Schutz- und/oder Stabilisierungshülle 44 umgeben sind. Der Darstellung in Fig.3 ist deutlich entnehmbar, dass der maximale Winkelversatz zweier aneinander gereihter Formkörper 2 durch die Anlage der kreisförmigen Stirnfläche 40 eines Formkörpers 2 an der absatzartigen Verbreiterung 14 des angereihten Formkörpers 2 begrenzt ist. Insbesondere ist durch diese Ausgestaltung der Formkörper 2 gewährleistet, dass bei einem im Bogen zu verlegenden Seilzugsystem ein jeder Formkörper 2 den gleichen Anteil des ingesamt zu bewältigenden Winkels übernimmt.

Wie der Fig. 3 entnehmbar, berührt die Gleithülle 42 die Durchgänge 4 der Formkörper 2 nur an sehr wenigen Stellen und bevorzugt an der Einschnürung 8 der jeweiligen Formkörper 2, sodass hierdurch eine erhebliche Reduzierung der beim Bewegen des Seils 38 auftretenden Reibungskräfte aufgrund der geringen wirksamen Anlageflächen erreicht ist.

## Patentansprüche

1. Seilzugglied mit einem druckstabilen Formkörper (2), der einen Durchgang (4) umfasst für die Aufnahme eines Zugkraft übertragenden Seiles (38), wobei der Durchgang (4) im Bereich einer Gelenkstelle (6) des Formkörpers (2) unter Bildung einer Einschnürung (8) reduziert ist, wobei ausgehend von dieser Einschnürung (8) zu den beiden stirnseitigen freien Enden (10, 12) des Formkörpers (2) hin der Durchmesser des Durchgangs (4) sich erweitert, und wobei die Gelenkstelle (6) an einem an einem freien Ende (10) des Formkörpers (2) angrenzenden Bereich angeordnet ist, **dadurch gekennzeichnet, dass** ausgehend von der Einschnürung (8) in Richtung des anderen freien Endes (12) der Durchmesser des Durchgangs (4) sich bis zum anderen freien Ende (12) stetig, vorzugsweise in konischer Bahnform, erweitert, und dass die Bahnform des Durchgangs (4), ausgehend von der Einschnürung (8) in Richtung des anderen freien Endes (12), durch einen geraden Kreiskegelstumpf als konische Erweiterung (24) beschreibbar ist, dessen Achse mit der Längsachse (30) des Formkörpers (2) zusammenfällt und dessen mit der Längsachse (30) eingeschlossener Winkel (α) 1 bis 5 Grad beträgt.

2. Seilzugglied mit einem druckstabilen Formkörper (2), der einen Durchgang (4) umfasst für die Aufnahme eines Zugkraft übertragenden Seiles (38), wobei der Durchgang (4) im Bereich einer Gelenkstelle (6) des Formkörpers (2) unter Bildung einer Einschnürung (8) reduziert ist, und wobei ausgehend von dieser Einschnürung (8) zum einen freien Ende (10) des Formkörpers (2) hin, das der Gelenkstelle (6) benachbart ist, der Durchmesser des Durchgangs (4) sich unter Bildung eines Einlauftrichters (18) stetig erweitert, wobei ausgehend von der Einschnürung (8) zum einen freien Ende (10) des Formkörpers (2) hin der Durchmesser des Durchgangs (4) sich im Querschnitt gesehen entlang eines Kreisbogens (20) erweitert, **dadurch gekennzeichnet, dass** unter Reduzierung der wirksamen Anlagefläche der Einschnürung (8) für das Zugkraft übertragende Seil (38) der Kreisbogen (20) des Einlauftrichters (18) als Teil der randseitigen Begrenzung für die insoweit geradlinig oder ballig verlaufende Einschnürung (8) zum anderen freien Ende (12) des Formkörpers (2) hin unmittelbar in eine sich bis zum anderen freien Ende (12) konisch erweiternd verlaufende Bahnform als Auslauftrichter (22) übergeht, und dass die Bahnform des Durchgangs (4), ausgehend von der Einschnürung (8) in Richtung des anderen freien Endes (12), durch einen geraden Kreiskegelstumpf als konische Erweiterung (24) beschreibbar ist, dessen Achse mit der Längsachse (30) des Formkörpers (2) zusammenfällt und dessen mit der Längsachse (30) eingeschlossener Winkel (α) 1 bis 5 Grad beträgt.

3. Seilzugglied nach einem der vorhergehenden Ansprüche, **dadurch gekennzeichnet, dass** der eingeschlossene Winkel (α) 2 bis 4 Grad und bevorzugt ungefähr 3 Grad beträgt.

4. Seilzugglied nach einem der vorhergehenden Ansprüche, **dadurch gekennzeichnet, dass**, ausgehend von der Einschnürung (8) in Richtung des anderen freien Endes (12), der Durchmesser des Durchgangs (4) sich stetig in konischer Bahnform über mindestens 60% der Längserstreckung des Formkörpers (2) erweitert.

5. Seilzugglied nach einem der vorhergehenden Ansprüche, **dadurch gekennzeichnet, dass**, ausgehend von der Einschnürung (8) in Richtung des anderen freien Endes (12), der Durchmesser des Durchgangs (4) sich in konischer Bahnform über 60 bis 95%, vorzugsweise über 70 bis 90% und besonders bevorzugt über 75 bis 85% der Längserstreckung des Formkörpers (2) erweitert.

6. Seilzugglied nach einem der vorhergehenden Ansprüche, **dadurch gekennzeichnet, dass** die Gelenkstelle (6) zumindest teilweise durch eine konvex geformte Außenkontur des Formkörpers (2) im Bereich seines einen freien Endes (10) gebildet ist, die über eine absatzartige Verbreiterung (14) in eine Außenfläche (16) übergeht, und dass die Außenfläche (16), ausgehend von der absatzartigen Verbreiterung (14) bis zum anderen freien Ende (12) des Formkörpers (2), das der Gelenkstelle (6) abgewandt ist, stetig verläuft, vorzugsweise eine zylinderförmige Bahnform aufweist.

7. Seilzugglied nach einem der vorhergehenden Ansprüche, **dadurch gekennzeichnet, dass** die Gelenkstelle (6) durch eine Kugelfläche auf der Außenkontur des Formkörpers (2) gebildet ist.

8. Seilzugglied nach einem der vorhergehenden Ansprüche, **dadurch gekennzeichnet, dass** eine zur Gelenkstelle (6) korrespondierende und zu dieser formkongruente Lagerstelle (32), der Gelenkstelle (6) gegenüberliegend, an der Innenkontur des Formkörpers (2) angeordnet und in der Art des Gürtels einer Kugelfläche ausgebildet ist.

9. Seilzugglied nach Anspruch 8, **dadurch gekennzeichnet, dass** die Lagerstelle (32) an dem anderen freien Ende (12) des Formkörpers (2) in eine kreisförmig ausgebildete Stirnfläche (40) des Formkörpers (2) übergeht und dass bei zwei aneinander gereihten Formkörpern (2) die Gelenkstelle (6) des einen Formkörpers (2) in der Lagerstelle (32) des anderen Formkörpers (2) gelenkig gelagert ist, und dass zur Begrenzung des maximalen Winkelversatzes zweier aneinander gereihter Formkörper (2), die kreisförmig ausgebildete Stirnfläche (40) des einen Formkörpers (2) zumindest teilweise in Anlage an eine Außenkontur des anderen Formkörpers (2) bringbar ist.

10. Seilzugglied nach einem der vorhergehenden Ansprüche, **dadurch gekennzeichnet, dass** der Formkörper (2) zumindest an seiner Innenwand eine Reibung vermindernde Beschichtung aufweist.

11. Seilzugglied nach einem der vorhergehenden Ansprüche, **dadurch gekennzeichnet, dass** der Formkörper (2) aus Kunststoff, Metall oder einem Keramikmaterial gebildet ist.

12. Seilzugsystem, aufweisend mindestens zwei Seilzugglieder mit jeweils einem druckstabilen Formkörper (2) nach einem der vorhergehenden Ansprüche, die aneinander gereiht einen Druckkraft aufnehmenden mehrteiligen Mantel bilden, sowie ein Zugkraft übertragendes Seil (38), das zumindest abschnittsweise in dem Mantel aufnehmbar ist.

13. Seilzugsystem nach Anspruch 12, **dadurch gekennzeichnet, dass** das Zugkraft übertragende Seil (38) ein Edelstahlseil ist.

14. Seilzugsystem nach Anspruch 12 oder 13, **dadurch gekennzeichnet, dass** das Zugkraft übertragende Seil (38) von einer schlauchförmigen Gleithülle (42) umgeben ist, die einen reibungsarmen Transport des Seils (38) in ihrem Innenraum zulässt und deren Außendurchmesser so gewählt ist, dass die Gleithülle (42) den Mantel durchgreifen kann.

15. Seilzugsystem nach einem der Ansprüche 12 bis 14, **dadurch gekennzeichnet, dass** der aus den aneinander gereihten Seilzuggliedern gebildete Mantel durch eine Schutz- und/oder Stabilisierungshülle (44) in Form eines flexiblen Schlauches umhüllt ist.
